# FASCICULE DE BREVET EUROPEEN

(11) **EP 0 312 430 B1**
(45) Date de publication et mention de la délivrance du brevet: **03.02.1993**
(21) Numéro de dépôt: 88402541.2
(22) Date de dépôt: 07.10.1988
(51) Int. Cl.: A01F 12/10

(54) **Dispositif d'alimentation par le dessus du rotor égreneur d'une moissonneuse-batteuse axiale**
Zuführeinrichtung von oben für einen Auskörnrotor eines Mähdreschers in Axialdreschweise
Device for feeding a shelling rotor of an axial flow combine from above

(30) Priorité: 13.10.1987 FR 8714090
(43) Date de publication de la demande: 19.04.1989
(73) Titulaire: ETABLISSEMENTS J. BOURGOIN Société Anonyme, F-85110 Chantonnay (FR)
(72) Inventeur: Bourgoin,Jean, 85000 La Roche sur Yon (FR)
(74) Mandataire: Lefebure, Gérard

(56) Documents cités:
- EP-A- 0 043 355
- EP-A- 0 082 882
- EP-A- 0 230 276
- DE-A- 2 245 603
- DE-A- 3 139 933
- FR-A- 1 339 512
- FR-A- 1 543 147
- FR-A- 2 065 225
- FR-A- 2 082 161
- FR-A- 2 525 429
- FR-A- 2 564 281
- FR-A- 2 588 151
- GB-A- 2 033 203
- GB-A- 2 064 285
- US-A- 4 665 929

## Description

La présente invention concerne d'une façon générale une moissonneuse-batteuse multi-céréales ou bien une machine spécialisée pour la récolte du maïs et connue sous le nom de "corn-sheller".

Ces types de machines comportent un ou plusieurs rotors égreneurs disposés d'une façon longitudinale dans la machine. Ils comportent également en général un convoyeur qui achemine la récolte depuis la barre de coupe ou le cueilleur jusqu'au rotor égreneur.

Il est déjà connu d'alimenter le rotor égreneur par le dessous et par son extrémité, mais dans ce cas, le flux de récolte a tendance à être renvoyé vers le convoyeur et entre difficilement dans le rotor.

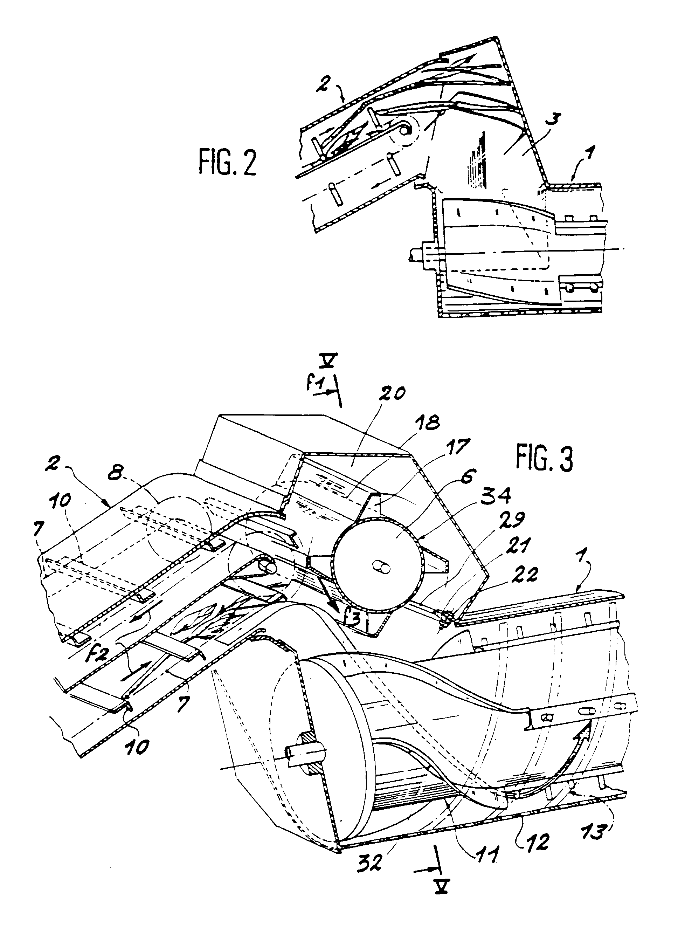

Il est connu également et ceci en particulier dans les corn-sheller d'alimenter le rotor égreneur par le dessus comme indiqué sur la figure 2. Le convoyeur débouche alors dans une chambre s'étendant à l'extrémité du convoyeur et dont la base complètement ouverte communique avec le dessus de la partie avant du ou des rotors égreneurs. La tôle du fond de cette chambre opposée à la sortie du convoyeur est constituée par une face plane et fixe.

On voit que dans cette disposition la récolte, pour aller du convoyeur au rotor égreneur, doit changer brusquement la direction de sa trajectoire d'environ 90° et que dans le cas des récoltes longues comportant des tiges, telles que céréales, maïs, haricot, tournesol ces dernières ont tendance à rester bloquées entre le convoyeur et la tôle du fond de la chambre, s'engageant difficilement dans le rotor égreneur en provoquant une mauvaise alimentation et très souvent des bourrages.

Il a déjà été proposé de disposer un tambour rotatif à pales, batteur transversal, entre le convoyeur de récolte et le rotor égreneur, perpendiculairement à ce dernier (voir FR-A-1 543 147). Toutefois, avec la disposition du batteur transversal décrit dans ce document antérieur il n'a pas été possible de résoudre de manière satisfaisante le problème de l'écoulement de la récolte entre le convoyeur et le rotor égreneur.

Pour tenter de résoudre ce problème, le brevet FR-A-2 065 225 propose de remplacer le batteur transversal du brevet FR-A-1 543 147 par un simple tambour de transfert (engreneur), et de prévoir des couteaux rotatifs, qui sont fixés a l'avant du rotor longitudinal de battage et de séparation et qui coopèrent avec une lame fixe pour tronçonner les produits longs de récolte en segments plus courts. Cette solution permet seulement de résoudre le problème d'alimentation des produits longs et elle amène des problèmes supplémentaires, dûs à l'usure rapide des couteaux rotatifs et de la lame fixe, et une plus grande consommation d'énergie pour l'entraînement du rotor longitudinal.

La présente invention a donc comme but principal de faciliter l'écoulement de la récolte entre le convoyeur et le rotor égreneur et de supprimer les bourrages entre ceux-ci mais, étant donné sa disposition, elle a également une action de prébattage qui augmente les capacités de la machine.

Selon l'invention ce but est atteint par le dispositif d'alimentation défini dans la revendication 1 annexée.

Le document FR-A-2 564 281 enseigne de disposer un tambour de transfert, partiellement au-dessus de la partie avant des deux rotors, d'axes parallèles, d'un dispositif séparateur d'une moissonneuse-batteuse. Il s'agit là d'une machine qui, du point de vue de la conception des organes de battage et de séparation, est fondamentalement différente de la machine de l'invention. Dans cette machine connue, la fonction de battage du produit de récolte et la fonction de séparation des grains du produit de récolte sont réalisées par des rotors différents. Le battage est effectué par un rotor disposé transversalement à la direction d'avance de la machine, tandis que la séparation des grains est effectuée par un ou deux rotors disposés dans le sens longitudinal de la machine. Le tambour de transfert n'est pas disposé entre un convoyeur d'alimentation et un rotor égreneur (correspondant à un rotor batteur) et il n'est pas destiné à améliorer l'écoulement de la récolte entre un tel convoyeur et un tel rotor batteur, mais il est disposé entre le rotor batteur transversal et les rotors séparateurs longitudinaux en vue de faciliter le transfert du produit déjà battu, en particulier des grains dégagés de leur enveloppe par battage, depuis le mécanisme de battage jusqu'au dispositif séparateur.

Dans le dispositif d'alimentation selon l'invention, la vitesse linéaire périphérique du tambour de l'engreneur étant supérieure à la vitesse linéaire du convoyeur, la récolte est peignée et subit un prébattage avant son entrée dans le rotor.

Du côté opposé au convoyeur et au-dessus du rotor, une tôle réglable est disposée parallèlement aux pales du tambour. Elle est réglée de telle sorte qu'elle frôle les pales du tambour de manière à couper le flux d'air qui tourne autour de ce tambour et à éviter ainsi les enroulements de paille.

Une forme particulière d'exécution du dispositif suivant l'invention est décrite ci-après à titre d'exemple purement indicatif et nullement limitatif en référence au dessin annexé sur lequel :
la figure 1 est une vue schématique en élévation latérale et avec arrachements d'une moissonneuse-batteuse ou d'une machine dite "corn-sheller" suivant l'invention.
la figure 2 est une vue partielle en coupe longitudinale d'une moissonneuse-batteuse axiale ou corn-sheller d'un type connu.
La figure 3 est une vue partielle en perspective avec arrachements permettant de voir l'intérieur de la machine et à échelle agrandie d'une moissonneuse-batteuse axiale telle qui montrée à la figure 1.
La figure 4 est une vue en coupe suivant la flèche f1 et la ligne V-V de la figure 3.
La figure 5 est une vue en coupe semblable à la figure 4 mais représentant un type particulier d'engreneur sur lequel les pales sont légèrement inclinées.
La figure 6 est une vue en perspective de l'enveloppe du rotor égreneur montrant principalement les formes particulières des tôles reliant l'ouverture pratiquée dans cette enveloppe à la chambre de l'engreneur.
La figure 7 est une vue en coupe semblable à la figure 4, mais représentant une variante de réalisation de l'engreneur.

La figure 2 représente une moissonneuse-batteuse axiale ou un corn-sheller comprenant un égreneur longitudinal 1 et un convoyeur de récolte élévateur 2 alimentant par le dessus l'égreneur par l'intermédiaire d'une chambre réceptrice 3 à fond lisse. Comme sus-indiqué, cette chambre actuellement utilisée provoque fréquemment des bourrages.

La moissonneuse-batteuse axiale perfectionnée suivant l'invention comprend un égreneur longitudinal 1 et un convoyeur de récolte élévateur 2 relié à un appareil appelé coupe 3 pourvu d'une lame de coupe 4 et d'une vis sans fin 31 ramenant la récolte vers l'axe longitudinal de la coupe et vers l'entrée du convoyeur 2, un rabatteur rotatif de récolte 5 et un engreneur 6 qui est l'objet même de l'invention c'est-à-dire le dispositif d'alimentation de l'égreneur par le dessus.

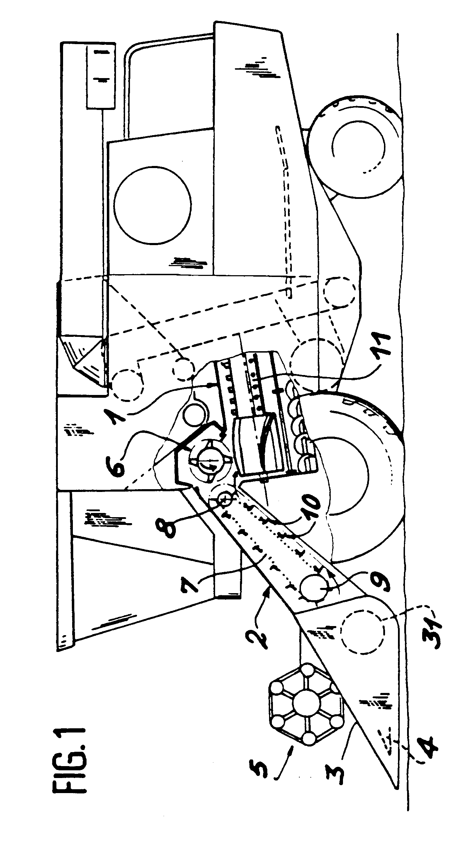

Comme on le voit aux figures 1 et 3, le convoyeur de récolte 2 comprend deux chaînes sans fin 7 tournant autour d'un arbre supérieur 8 et d'un arbre inférieur 9 et reliées transversalement par des liteaux 10. Les chaînes tournant dans le sens indiqué par les flèches f2, la récolte est entraînée comme représentée et acheminée entre les liteaux 10 et le fond inférieur de l'élévateur. Elle arrive face à l'engreneur 6 qui dévie le flot de récolte vers le bas, en direction de l'égreneur 1.

Cet égreneur est constitué par un rotor 11 placé longitudinalement et tournant à l'intérieur d'un cylindre 12. La récolte avance dans ce cylindre sous l'effet des pales hélicoïdales du rotor 32 et des équerres 13 placées à l'intérieur du cylindre selon un enroulement hélicoïdal.

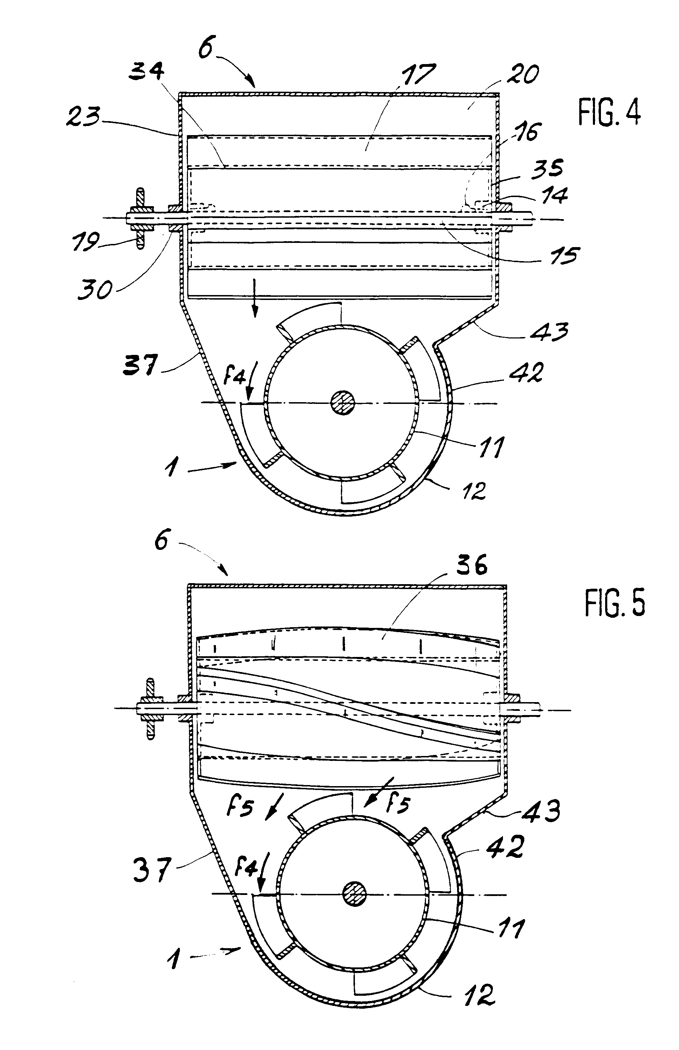

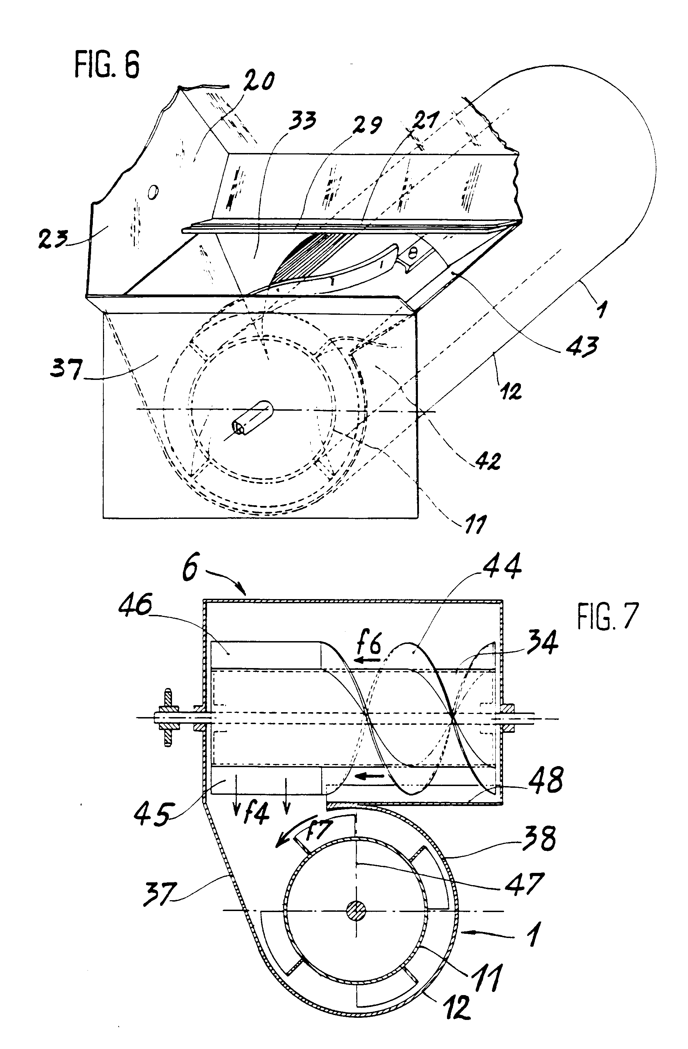

Le cylindre 12 est ouvert à sa partie supérieure avant, l'ouverture pouvant avoir une forme sensiblement rectangulaire 33 et une des parois latérales 37 du cylindre aboutissant à cette ouverture est évasée (figures 4 et 6) de façon à atteindre à son sommet la largeur du convoyeur de récolte 2.

Du fait de la rotation de l'égreneur dans le sens indiqué f3, la récolte pénètre à l'intérieur suivant les flèches f4. Du côté opposé à cette entrée de récolte, l'enveloppe cylindrique 12 se prolonge en 42 au-dessus du diamètre horizontal du rotor 11 et est reliée à l'ouverture rectangulaire 33 par un pan légèrement incline 43 comme montré dans les figures 4 et 6.

L'engreneur 6 placé entre le convoyeur de récolte et l'égreneur, est constitué par un tambour cylindrique 34 d'une longueur sensiblement égale à la largeur du convoyeur 2, et fermé à chaque extrémité par deux flasques 35. Ces flasques possèdent des moyeux 14 qui rendent le tambour solidaire de l'arbre 15 par des clavettes 16. Sur le tambour 34, quatre pales 17 équidistantes sont soudées parallèlement à l'axe, leur face d'attaque 18 étant inclinée en arrière pour faciliter l'éjection de la récolte.

Dans une disposition particulière (figure 5), les pales 36 ne sont pas soudées suivant les génératrices du cylindre mais légèrement inclinées de façon à dévier la récolte suivant les flèches f5 vers l'entrée de l'égreneur f4. L'engreneur tourne à l'intérieur d'une chambre 20 qui possède une ouverture sur toute sa largeur face au convoyeur 2 et une ouverture sur toute sa largeur débouchant au-dessus du rotor 1 (figure 4). Cette chambre possède deux parois verticales 23 sur lesquelles sont fixés les roulements 30 dans lesquels tourillonne l'arbre 15. L'arbre est entraîné en rotation par un pignon 19.

A l'extrémité arrière de l'ouverture rectangulaire de l'enveloppe du rotor 1 (figures 3 et 6) une plaque 29 fixée sur un support 21 et s'étendant sur toute la largeur de l'engreneur peut se régler à l'aide des boulons 22 pour venir frôler les pales 17 lors de leur rotation.

La figure 3 montre clairement à l'aide d'une flèche, l'intérêt du tambour d'alimentation 6 suivant l'invention pour une alimentation sans problème de l'égreneur de la moissonneuse-batteuse.

Dans la variante de réalisation montrée sur la figure 7, les pales 45 de l'engreneur 6 ne s'étendent que sur une partie de la longeur du tambour cylindrique 34 de l'engreneur, et elles sont prolongées par une ou plusieurs spires de vis 44, qui sont elles-mêmes soudées sur la partie restante de la longueur du tambour 34. Ces vis 44, en tournant, acheminent la récolte de la droite vers la gauche de la machine suivant les flèches f6. Les pales 45 sont soudées parallèlement à l'axe et possèdent une face d'attaque 46 inclinée en arrière pour faciliter l'éjection de la récolte vers le rotor 11.

Dans sa partie avant située sous l'engreneur 6, le rotor égreneur 11 est bordé du côté gauche par un plan incliné 37 comme dans les figures 4 et 5, et il est enveloppé du côté droit par une tôle cylindrique 38 qui se prolonge jusque dans les environs ou légèrement plus loin que l'axe vertical 47 qui intersecte l'axe de rotation du rotor 11, provoquant ainsi lors de la rotation de la matière à battre, un mouvement de la droite vers la gauche suivant la flèche f7, mouvement qui collabore avec le mouvement d'entrée de la matière suivant la flèche f4.

Dans la figure 7, une tôle horizontale 48, plane ou légèrement courbe, est prévue au dessous du tambour 34 en correspondance avec les vis 44. La tôle 48 coopère avec les vis 44 pour créer le mouvement de la récolte vers les pales 45 et, delà, vers le rotor 11.

Des modifications de détails du domaine des équivalents techniques peuvent être apportées au dispositif décrit ci-dessus, sans que l'on sorte pour cela du domaine de l'invention tel qu'il est défini dans les revendications.

## Revendications

1. Dispositif d'alimentation du rotor égreneur (11) d'une moissonneuse-batteuse axiale, constitué par un tambour rotatif (34) à pales, appelé engreneur (6), placé entre le convoyeur de récolte (2) comportant des liteaux (10) transversaux et l'égreneur (1), perpendiculairement à ce dernier, près du convoyeur (2) dans une chambre (20) ayant une ouverture face audit convoyeur et une ouverture débouchant à l'intérieur de l'enveloppe cylindrique (12) qui entoure le rotor (11) de l'égreneur (1), l'engreneur (6) possèdant un sens de rotation de haut en bas dans sa partie avant, de telle sorte qu'il happe la récolte qui débouche du convoyeur (2), caractérisé en ce que la chambre (20) et le rotor engreneur (6) sont disposés au-dessus de la partie avant du rotor égreneur (11) et de son enveloppe cylindrique (12), en ce que l'ouverture (33) par laquelle la chambre (20) débouche à l'intérieur de l'enveloppe cylindrique (12) est une large ouverture (33) pratiquée dans la demi-partie supérieure de l'enveloppe cylindrique (12), et en ce que les pales (17;36;45) de l'engreneur (6) passent le plus près possible des liteaux (10) du convoyeur (2) et des pales du rotor égreneur (11), l'agencement étant tel que l'engreneur (6) dévie la récolte de haut en bas vers le rotor (11) de l'égreneur (1) en la faisant pénétrer de force dans l'enveloppe cylindrique (12) de celui-ci à travers l'ouverture (33).

2. Dispositif suivant la revendication 1, caractérisé en ce qu'une tôle réglable (29) qui s'étend sur toute la longueur de l'engreneur (6) est fixée sur la partie arrière de l'ouverture rectangulaire (33) de l'enveloppe cylindrique (12) du rotor (11) et vient frôler les pales (17;36;45) de l'engreneur (6) coupant ainsi le flux d'air autour de l'engreneur et le dirigeant vers l'intérieur de l'égreneur (1).

3. Dispositif suivant la revendication 1, caractérisé en ce que les pales (17) de l'engreneur (6) possèdent une face d'attaque (18) inclinée en arrière pour faciliter l'écoulement du flux de récolte.

4. Dispositif suivant la revendication 1, caractérisé en ce que les pales (36) de l'engreneur (6) peuvent être inclinées par rapport à son axe pour créer un mouvement de récolte dirigé de haut en bas et de droite à gauche vers la zone (f4) d'alimentation du rotor (11).

5. Dispositif suivant la revendication 1, caractérisé en ce que, dans sa partie avant ouverte vers le haut, l'enveloppe (12) du rotor égreneur (11) est raccordée à l'ouverture rectangulaire (33) par un plan incliné (37) du côté du rotor (11) correspondant à l'entrée de la récolte, tandis que l'enveloppe cylindrique (12) est prolongée (en 42) au-dessus du diamètre horizontal du rotor (11) du côté opposé dudit rotor.

6. Dispositif suivant la revendication 3, caractérisé en ce que les pales (45) de l'engreneur ne s'étendent que sur une partie de la longueur du tambour cylindrique (34) et sont prolongées, sur la partie restante de la longueur dudit tambour, par une ou plusieurs spires de vis (44) pour créer un mouvement de récolte dans le sens axial du tambour 34 depuis les vis (44) vers les pales (45), lesquelles provoquent l'écoulement du flux de récolte vers le rotor égreneur (11).

7. Dispositif suivant la revendication 6, caractérisé en ce que dans sa partie avant située sous l'engreneur (6), la tôle cylindrique (12) enveloppant le rotor égreneur (11) est prolongée (en 38) jusque dans une zone située verticalement au-dessus de l'axe de rotation dudit rotor, et en ce qu'une tôle (48) est disposée sous une partie de la longueur du tambour engreneur (34) en correspondance avec les vis (44) de celui-ci, pour coopérer avec lesdites vis (44) pour créer ledit mouvement de récolte vers la zone d'alimentation du rotor égreneur (11).

## Claims

1. A device for feeding the threshing rotor (11) of a axial combine harvester, the device being constituted by a bladed rotary drum (34) called the beater (6) and placed between the crop elevator (2) which includes transverse bars (10) and the thresher (1), the beater extending perpendicularly to the thresher, adjacent to the elevator (2) and in a chamber (20) having an opening facing said elevator and an opening opening out into the inside of the cylindrical casing (12) surrounding the rotor (11) of the thresher (1), the front portion of the beater (6) rotating downwards to take hold of the crop coming from the elevator (2), the device characterized in that the chamber (20) and the beating rotor (6) are disposed above the front portion of the threshing rotor (11) and of its cylindrical casing (12), in that the opening (33) through which the chamber (20) opens out to the inside of the cylindrical casing (12) is a large opening (33) formed through the top half-portion of the cylindrical casing (12), and in that the blades (17; 36; 45) of the beater (6) pass as close to possible to the bars (10) of the elevator (2) and to the blades of the threshing rotor (11), the arrangement being such that the beater (6) deflects the crop downwards towards the rotor (11) of the thresher (1), causing it to penetrate by force into the cylindrical casing (12) thereof through the opening (33)

2. A device according to claim 1, characterized in that an adjustable metal sheet (29) which extends along the entire length of the beater (6) is fixed on the rear portion of the rectangular opening (33) in the cylindrical casing (12) of the rotor (11) and lies close to the blades (17; 36; 45) of the beater (6), thereby interrupting the flow of air around the beater and directing it towards the inside of the thresher (1).

3. A device according to claim 1, characterized in that the blades (17) of the beater (6) have a leading face (18) that slopes backwards to facilitate crop flow.

4. A device according to claim 1, characterized in that the blades (36) of the beater (6) can be inclined relative to the axis of the beater to create directed motion of the crop downwards and from right to left towards the feed zone (f4) of the rotor (11).

5. A device according to claim 1, characterized in that in its upwardly open front portion, the casing (12) of the thresher rotor (11) is connected to the rectangular opening (33) by a sloping plane (37) on the side of the rotor (11) corresponding to the crop inlet, whereas the cylindrical casing (12) is extended (at 42) above the horizontal diameter of the rotor (11) on the opposite side of said rotor.

6. A device according to claim 3, characterized in that the blades (45) of the beater extend only over a portion of the length of the cylindrical drum (34) and are extended, over the remaining portion of the length of said drum, by one or more screw turns (44) to create crop movement in an axial direction of the drum (34) from the screw (44) towards the blades (45), which blades cause the crop to flow towards the threshing rotor (11).

7. A device according to claim 6, characterized in that in its front portion situated beneath the thresher (6), the cylindrical sheet metal (12) encasing the threshing rotor (11) is extended (at 38) into a zone situated vertically above the axis of rotation of said rotor, and in that a metal sheet (48) is disposed beneath the portion of the length of the beater drum (34) that corresponds with the screws (44) thereof, in order to co-operate with said screws (44) to create said crop movement towards the feed zone of the threshing rotor (11).

## Patentansprüche

1. Vorrichtung zum Beschicken des Entkörnerrotors (11) eines axialen Mähdreschers, bestehend aus einer mit Schaufeln besetzten drehbaren Trommel (34), bezeichnet als Dreschmaschinen-Beschicker (6), der zwischen dem Erntegutförderer (2) mit Querlatten (10) und dem Entkörner (1) rechtwinklig zu diesem letzteren in der Nähe des Förderers (2) in einer Kammer (20) angeordnet ist, die eine diesem Förderer zugewandte Öffnung und eine ins Innere eines zylindrischen Gehäuses (12), das den Entkörnerrotor (1) umgibt, führende Öffnung aufweist, wobei der Beschicker (6) in seinem vorderen Teil eine Drehrichtung von oben nach unten aufweist, so daß er das Erntegut erfaßt, das aus dem Förderer (2) austritt, dadurch gekennzeichnet, daß die Kammer (20) und der Beschickerrotor (6) über dem vorderen Teil des Entkörnerrotors (11) und seines zylindrischen Gehäuses (12) angeordnet sind, daß die Öffnung (33), durch die die Kammer (20) ins Innere des zylindrischen Gehäuses (12) entleert, eine große Öffnung (33) ist, die in der oberen Hälfte des zylindrischen Gehäuses (12) ausgeführt ist; daß die Schaufeln (17; 36; 45) des Förderers (6) möglichst nahe an den Querlatten (10) des Förderers (2) und an den Schaufeln des Entkörnerrotors (11) vorbeistreichen, wobei die Anordnung so ist, daß der Beschicker (6) das Erntegut von oben nach unten gegen den Rotor (11) des Entkörners (1) umlenkt und es mit Kraft durch die Öffnung (33) in das zylindrische Gehäuse (12) dieses letzteren hineindrückt.

2. Vorrichtung gemäß Anspruch 1, dadurch gekennzeichnet, daß ein einstellbares Blech (29), das sich über die ganze Länge des Beschickers (6) erstreckt, am hinteren Teil der rechteckigen Öffnung (33) des zylindrischen Gehäuses (12) des Rotors (11) befestigt ist und an den Schaufeln (17; 36; 45) des Beschickers (6) anstreift und somit den Luftstrom um den Beschicker unterbricht und ihn gegen das Innere des Entkörners (1) umlenkt.

3. Vorrichtung gemäß Anspruch 1, dadurch gekennzeichnet, daß die Schaufeln (17) des Beschickers (6) eine nach hinten geneigte Wirkfläche (18) aufweisen, um das Abfließen des Erntegutstroms zu erleichtern.

4. Vorrichtung gemäß Anspruch 1, dadurch gekennzeichnet, daß die Schaufeln (36) des Beschickers (6) gegenüber seiner Achse geneigt werden können, um eine Erntegutbewegung von oben nach unten und von rechts nach links zum Beschickungsbereich (f4) des Rotors (11) zu bewirken.

5. Vorrichtung gemäß Anspruch 1, dadurch gekennzeichnet, daß das Gehäuse (12) des Entkörnerrotors (11) in seinem nach oben zu offenen vorderen Teil von der Seite des Rotors (11) her über eine schiefe Ebene (37) entsprechend der Erntegutzufuhr mit der rechteckigen Öffnung (33) verbunden ist, während das zylindrische Gehäuse (12) (bei 42) oberhalb des horizontalen Durchmessers des Rotors (11) an der gegenüberliegenden Seite dieses Rotors verlängert ist.

6. Vorrichtung gemäß Anspruch 3, dadurch gekennzeichnet, daß sich die Schaufeln (45) des Beschickers nur über einen Teil der Länge der zylindrischen Trommel (34) erstrecken und über den restlichen Teil der Länge dieser Trommel durch einen oder mehrere Schneckengänge (44) verlängert sind, um eine Bewegung des Ernteguts in axialer Richtung der Trommel (34) von der Schnecke (44) zu den Schaufeln (45) hervorzurufen, die den Ablauf des Ernteguts zum Entkörnerrotor (11) bewirkt.

7. Vorrichtung gemäß Anspruch 6, dadurch gekennzeichnet, daß das zylindrische Blech (12), das den Entkörnerrotor (11) umgibt, in seinem vorderen Teil, der unter dem Beschicker (6) liegt, (bei 38) bis in einen senkrecht über der Drehachse dieses Rotors liegenden Bereich verlängert ist und daß ein Blech (48) unter einem Teil der Länge der Beschickertrommel (34) in der Höhe der Schneckengänge (44) dieser letzteren verlängert ist, um mit diesen Schneckengängen (44) zusammenzuwirken, um diese Bewegung des Ernteguts zur Beschickungszone des Entkörnerrotors (11) zu bewirken.
